(19) Europäisches Patentamt
European Patent Office
Office européen des brevets

(11) EP 4 112 296 A1

(12) **EUROPEAN PATENT APPLICATION**
published in accordance with Art. 153(4) EPC

(43) Date of publication:
**04.01.2023 Bulletin 2023/01**

(21) Application number: **21776682.3**

(22) Date of filing: **26.03.2021**

(51) International Patent Classification (IPC):
***B32B 9/00*** *(2006.01)* ***B32B 27/00*** *(2006.01)*
***B32B 27/34*** *(2006.01)* ***H01B 5/14*** *(2006.01)*
***H01B 13/00*** *(2006.01)*

(52) Cooperative Patent Classification (CPC):
**B32B 9/00; B32B 27/00; B32B 27/34; H01B 5/14; H01B 13/00**

(86) International application number:
**PCT/JP2021/012764**

(87) International publication number:
**WO 2021/193889 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020 JP 2020057706**

(71) Applicant: **LINTEC CORPORATION**
**Itabashi-ku**
**Tokyo 173-0001 (JP)**

(72) Inventors:
- **KINOSHITA, Hiroki**
  **Tokyo 173-0001 (JP)**
- **NAGANAWA, Satoshi**
  **Tokyo 173-0001 (JP)**

(74) Representative: **Gille Hrabal Partnerschaftsgesellschaft mbB**
**Patentanwälte**
**Brucknerstraße 20**
**40593 Düsseldorf (DE)**

# (54) LAMINATE FOR TRANSPARENT CONDUCTIVE FILM, TRANSPARENT CONDUCTIVE FILM, AND TRANSPARENT CONDUCTIVE FILM MANUFACTURING METHOD

(57) Provided is a laminate for a transparent conductive film, the laminate being thin and excellent in heat resistance, and enabling a casting film to be easily peeled off to obtain a transparent conductive film having good properties. The laminate for a transparent conductive film is used to form a transparent conductive film and includes a casting film and a cured resin layer in this order, wherein the cured resin layer is composed of a cured product of a curable resin composition containing a polymer component and a curable monomer, and has a predetermined thermal deformation rate and thickness; the casting film has a first surface that may be provided with a release layer and a second surface not provided with a release layer; and the cured resin layer is formed on the second surface of the casting film.

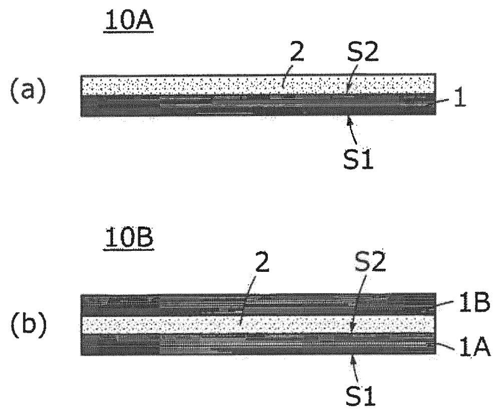


Fig. 1

EP 4 112 296 A1

## Description

[Technical Field]

The present invention relates to a laminate for a transparent conductive film, the laminate to be used for forming a transparent conductive layer; a transparent conductive film formed using the laminate for a transparent conductive layer; and a method of manufacturing a transparent conductive film.

[Background Art]

A transparent conductive film in which a transparent conductive layer is formed on a surface of a substrate film is used in a liquid crystal display; an electroluminescence (EL) display; an electrochromic (EC) display; a solar cell; an electromagnetic shielding film for an electromagnetic shield; a film sensor, such as a transparent touch panel; and the like.
In the process of manufacturing a transparent conductive film, the processing is often performed under harsh conditions involving heating, such as sputtering of a metal compound and subsequent annealing treatment. Thus, high heat resistance is required for a laminate serving as a substrate on which a transparent conductive layer is to be formed. A conceivable solution for this issue is using a laminate including a film formed using a highly heat-resistant resin (e.g., a resin having a glass transition temperature of 250°C or higher), such as a polyimide resin.
In addition, reducing the thickness of a film of the highly heat-resistant resin has been required in recent years for purposes, such as improving transparency and flexibility or reducing weight.
For example, Previous Literature 1 discloses a polyimide resin that is soluble in a solvent and can be used to obtain a highly transparent film by a solution casting method.

[Citation List]

[Patent Literature]

Patent Literature 1: WO 2017/179367

[Summary of Invention]

[Technical Problem]

As described in Patent Literature 1, when a polyimide resin layer is formed on a glass plate by a solution casting method, the polyimide resin layer can be peeled off from the glass plate relatively easily. However, in some cases where the polyimide resin layer was formed on a resin sheet or a resin film by a solution casting method, the formed polyimide resin layer could not be well peeled off from the resin sheet or the resin film or could not be peeled off at all. This tendency is particularly remarkable when the thickness of the polyimide film formed by a solution casting method is small. This has also caused a difficulty in processing the polyimide film by a roll-to-roll process.
In view of the above problems, an object of the present invention is to provide a laminate for a transparent conductive film, the laminate being thin and excellent in heat resistance, and enabling a casting film to be easily peeled off to obtain a transparent conductive film having good properties. In addition, another object of the present invention is to provide a transparent conductive film having good properties, being thin, and having excellent heat resistance, and a method of manufacturing the transparent conductive film.

[Solution to Problem]

As a result of diligent research to solve the above problems, the present inventors found that the above problems can be solved by a laminate for a transparent conductive film, the laminate to be used to form a transparent conductive film and including a casting film and a cured resin layer in this order, in which the cured resin layer has a predetermined thermal deformation rate and thickness, and completed the present invention.
That is, the present invention provides the following [1] to [9].

[1] A laminate for a transparent conductive film, the laminate to be used to form a transparent conductive film and including a casting film and a cured resin layer in this order, wherein

the cured resin layer is a layer composed of a cured product of a curable resin composition containing a polymer component (A) and a curable monomer (B);

an absolute value of a thermal deformation rate of the cured resin layer by a temperature increase to 150°C is 1.2% or lower;
a thickness of the cured resin layer is 20 $\mu$m or less;
the casting film has a first surface that may be provided with a release layer and a second surface not provided with a release layer; and
the cured resin layer is formed on the second surface of the casting film.

[2] The laminate for a transparent conductive film according to [1] above, wherein a glass transition temperature of the polymer component (A) is 250°C or higher.
[3] The laminate for a transparent conductive film according to [1] or [2] above, wherein a weight average molecular weight of the polymer component (A) is 100000 or greater.
[4] The laminate for a transparent conductive film according to any one of [1] to [3] above, wherein the polymer component (A) is a polyimide resin.
[5] The laminate for a transparent conductive film according to [4] above, wherein the polyimide resin is soluble in methyl ethyl ketone.
[6] The laminate for a transparent conductive film according to [4] or [5] above, wherein the polyimide resin has a fluoro group in the molecule.
[7] The laminate for a transparent conductive film according to any one of [1] to [6] above, wherein an elongation at break of the cured resin layer is 2.5% or higher.
[8] A transparent conductive film including the laminate for a transparent conductive film defined in any one of [1] to [7] above and a transparent conductive layer provided on the cured resin layer of the laminate for a transparent conductive film.
[9] A method of manufacturing a transparent conductive film, the method including:

forming a conductive material layer on the cured resin layer of the laminate for a transparent conductive film defined in any one of [1] to [7] above; and
heating the conductive material layer to 140°C or higher to form a transparent conductive layer.

[Advantageous Effects of Invention]

According to the present invention, the laminate for a transparent conductive film can be provided, the laminate being thin and excellent in heat resistance, and enabling the casting film to be easily peeled off to obtain a transparent conductive film having good properties. In addition, the present invention can provide the transparent conductive film having good properties, being thin, and having excellent heat resistance, and the method of manufacturing the transparent conductive film.

[Brief Description of Drawings]

Fig. 1 is a cross-sectional schematic view illustrating an example of a configuration of a laminate for a transparent conductive film according to an embodiment of the present invention.
Fig. 2 is a cross-sectional schematic view illustrating an example of a configuration of a laminate for a transparent conductive film according to an embodiment of the present invention.
Fig. 3 is a process chart illustrating an example of a method of manufacturing a laminate for a transparent conductive film.
Fig. 4 is a process chart illustrating an example of a method of manufacturing a transparent conductive film.

[Description of Embodiments]

In the present specification, the description "from XX to YY" means "XX or higher and YY or lower" or "XX or greater and YY or less".
In the present specification, for example, "(meth)acrylic acid" refers to both "acrylic acid" and "methacrylic acid", and the same is true of other similar terms.
A laminate for a transparent conductive film according to an embodiment of the present invention will be described below.

1. Laminate for transparent conductive film

A laminate for a transparent conductive film according to an embodiment of the present invention includes a casting film and a cured resin layer in this order. In addition, the cured resin layer is a layer composed of a cured product of a curable resin composition containing a polymer component (A) and a curable monomer (B), and has an absolute value of a thermal deformation rate of 1.2% or lower by a temperature increase to 150°C, and a thickness of 20 $\mu$m or less. Furthermore, the casting film has a first surface, and the first surface may or may not be provided with a release layer. The cured resin layer is formed on a second surface of the casting film, the surface opposite from the surface having the release layer, and a release layer is not provided on the second surface.

As a result of diligent research, the present inventors found the following matters: (i) obtaining the cured resin layer from the curable resin composition containing the polymer component (A) and the curable monomer (B) and (ii) forming the cured resin layer on a surface the casting film, the surface not having a release layer, allow the curable resin composition to be well applied onto the casting film and can well form the cured resin layer on the casting film, and the cured resin layer, even when formed with a thickness of 10 $\mu$m or less, can be easily peeled off from the casting film, and in addition, (iii) the cured resin layer with a thermal deformation rate of 1.2% or lower by a temperature increase to 150°C can withstand the heat load when the transparent conductive layer is formed on the cured resin layer and thus prevents the occurrence of deformation or the like in the cured resin layer. As a result, this prevents deterioration of the performance of the transparent conductive layer and provides a transparent conductive film having good properties.

Hereinafter, for ease of understanding, the configuration of each layer and the film will be described with reference to the drawings or using the symbols indicated in the drawings as appropriate, but the present invention is not limited to the illustrated embodiments.

A specific example of a configuration of the laminate for a transparent conductive film according to an embodiment of the present invention is illustrated in Fig. 1.

A laminate 10A for a transparent conductive film illustrated in Fig. 1(a) has a casting film 1 on one surface of a cured resin layer 2. As described later, a transparent conductive layer is provided on a surface of the cured resin layer 2, the surface opposite from the surface provided with the casting film 1, to form a transparent conductive film.

A laminate 10B for a transparent conductive film illustrated in Fig. 1(b) has casting films 1A and 1B each on both surfaces of the cured resin layer 2. When the transparent conductive layer is provided, any of the casting films 1A and 1B is peeled off and removed. Then, the transparent conductive layer is provided on the exposed surface.

In this case, at least any of the casting films 1A and 1B is laminated with the cured resin layer in a state where the second surface faces the cured resin layer.

1-1. Cured resin layer

The cured resin layer included in the laminate for a transparent conductive film according to an embodiment of the present invention is composed of a cured product of the curable resin composition containing the polymer component (A) and the curable monomer (B). The cured resin layer may be a single layer or may include a plurality of laminated layers.

Polymer component (A)

The glass transition temperature (Tg) of the polymer component (A) is preferably 250°C or higher, more preferably 290°C or higher, and even more preferably 320°C or higher. The polymer component (A) with a Tg of 250°C or higher easily imparts sufficient heat resistance to the cured resin layer and makes it easier to prevent the cured resin layer from being affected by heating of annealing treatment or the like to cause deformation or the like when the transparent conductive layer is formed.

In addition, the polymer component (A) with a Tg of 250°C or higher makes it easier to avoid decrease in heat resistance caused by the effect of a polymer produced when a curable composition prepared with the curable monomer (B) described later is cured.

Here, "Tg" refers to the temperature at the maximum of tan$\delta$ (loss modulus/storage modulus) obtained by viscoelasticity measurement (measured under a tensile mode with a frequency of 11 Hz, a heating rate of 3°C/minute, and a range from 0 to 250°C).

The weight average molecular weight (Mw) of the polymer component (A) is preferably 100000 or greater, more preferably 200000 or greater, and preferably 1000000 or less, more preferably 800000 or less, even more preferably 500000 or less.

In addition, the molecular weight distribution (Mw/Mn) of the polymer component (A) is in a range preferably of 1.0 to 5.0 and more preferably of 2.0 to 4.5. The weight average molecular weight (Mw) and molecular weight distribution (Mw/Mn) are values measured by gel permeation chromatography (GPC) in terms of polystyrene. The polymer component

(A) with a Mw of 100000 or greater facilitates an increase in elongation at break of the cured resin layer.

The polymer component (A) is preferably a thermoplastic resin, more preferably an amorphous thermoplastic resin. Using an amorphous thermoplastic resin makes it easier to obtain a cured resin layer having excellent optical isotropy and in addition a laminate for a transparent conductive film, the laminate having excellent transparency. In addition, an amorphous thermoplastic resin is generally easily soluble in an organic solvent, and thus the cured resin layer can be efficiently formed by a solution casting method as described later.

Here, the amorphous thermoplastic resin refers to a thermoplastic resin for which a melting point is not observed in differential scanning calorimetry.

The polymer component (A) is preferably soluble particularly in a general-purpose organic solvent with a low boiling point, such as ethyl acetate and methyl ethyl ketone (MEK). The polymer component (A) soluble in a general-purpose organic solvent makes it easier to form the cured resin layer by coating.

A particularly preferred material as the polymer component (A) is an amorphous thermoplastic resin with a Tg of 250°C or higher and soluble in a general-purpose organic solvent with a low boiling point, such as ethyl acetate and methyl ethyl ketone.

Furthermore, from the viewpoint of heat resistance, the polymer component (A) is preferably a thermoplastic resin having a ring structure such as an aromatic ring structure or an alicyclic structure, more preferably a thermoplastic resin having an aromatic ring structure.

Specific examples of the polymer component (A) include: a polyimide resin; and a polyarylate resin having a Tg of 250°C or higher. In general, these resins have a high Tg and excellent heat resistance; furthermore, since these resins are amorphous thermoplastic resins, it is possible to form a coating by a solution casting method. Of these, a polyimide resin is preferable due to its high Tg and excellent heat resistance, and the fact that it is easy to obtain a polyimide resin that exhibits good heat resistance and that is soluble in a general-purpose organic solvent.

The polyimide resin is not particularly limited as long as the effect of the present invention is not impaired. Examples of the polyimide resin that can be used include an aromatic polyimide resin, an aromatic (carboxylic acid component)-cyclic aliphatic (diamine component) polyimide resin, a cycloaliphatic (carboxylic acid component)-aromatic (diamine component) polyimide resin, a cycloaliphatic polyimide resin, and a fluorinated aromatic polyimide resin. In particular, a polyimide resin having a fluoro group in the molecule is preferable.

Specifically, the polyimide resin is preferably produced by preparing a polyamic acid by the polymerization of an aromatic diamine compound and a tetracarboxylic dianhydride and then subjecting the resulting polyamic acid to a chemical imidization reaction.

Any aromatic diamine compound can be used as long as it is one that, via the reaction with the tetracarboxylic dianhydride used together, gives a polyimide that is soluble in a common solvent (for example, N,N-dimethylacetamide (DMAC)) and has a predetermined transparency. Specific examples include m-phenylenediamine, p-phenylenediamine, 3,4'-diaminodiphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 3,3'-diaminodiphenylmethane, 3,4'-diaminodiphenylmethane, 4,4'-diaminodiphenylmethane, 2,2-bis(4-aminophenyl)propane, 2,2-bis(3-aminophenyl)propane, 2-(3-aminophenyl)-2-(4-aminophenyl)propane, 2,2-bis(4-aminophenyl)-1,1,1,3,3,3-hexafluoropropane, 2,2-bis(3-aminophenyl)-1,1,1,3,3,3-hexafluoropropane, 2-(3-aminophenyl)-2-(4-aminophenyl)-1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 4,4'-bis(4-aminophenoxy)biphenyl, 3,3'-bis(4-aminophenoxy)biphenyl, 3,4'-bis(3-aminophenoxy)biphenyl, bis[4-(4-aminophenoxy)phenyl]sulfide, bis[3-(4-aminophenoxy)phenyl]sulfide, bis[4-(3-aminophenoxy)phenyl]sulfide, bis[3-(4-aminophenoxy)phenyl]sulfide, bis[3-(3-aminophenoxy)phenyl]sulfide, bis[3-(4-aminophenoxy)phenyl]sulfone, bis[4-(4-aminophenyl)]sulfone, bis[3-(3-aminophenoxy)phenyl]sulfone, bis[4-(3-aminophenyl)]sulfone, bis[4-(3-aminophenoxy)phenyl]ether, bis[4-(4-aminophenoxy)phenyl]ether, bis[3-(3-aminophenoxy)phenyl]ether, bis[4-(3-aminophenoxy)phenyl]methane, bis[4-(4-aminophenoxy)phenyl]methane, bis[3-(3-aminophenoxy)phenyl]methane, bis[3-(4-aminophenoxy)phenyl]methane, 2,2-bis[4-(3-aminophenoxy)phenyl]propane, 2,2-bis[4-(4-aminophenoxy)phenyl]propane, 2,2-bis[3-(3-aminophenoxy)phenyl]propane, 2,2-bis[4-(3-aminophenoxy)phenyl]-1,1,1,3,3,3-hexafluoropropane, 2,2-bis[4-(4-aminophenoxy)phenyl] -1,1,1,3,3,3 -hexafluoropropane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 1,3-bis[4-(4-amino-6-trifluoromethylphenoxy)-a,a-dimethylbenzyl]benzene, 1,3-bis[4-(4-amino-6-fluoromethylphenoxy)-$\alpha$,$\alpha$-dimethylbenzyl]benzene, 2,2'-dimethyl-4,4'-diaminobiphenyl, 3,3'-dimethyl-4,4'-diaminobiphenyl, 3,3'-bis(trifluoromethyl)-4,4'-diaminobiphenyl, and 2,2'-bis(trifluoromethyl)-4,4'-diaminobiphenyl.

These aromatic diamine compounds may be used alone or in a combination of two or more. Furthermore, from the viewpoint of transparency and heat resistance, preferable aromatic diamine compounds are the ones having a fluoro group, such as 2,2-bis(4-aminophenyl)-1,1,1,3,3,3-hexafluoropropane, 2,2-bis(3-aminophenyl)-1,1,1,3,3,3-hexafluoropropane, 2-(3-aminophenyl)-2-(4-aminophenyl)-1,1,1,3,3,3-hexafluoropropane, 2,2-bis[4-(3-aminophenoxy)phenyl]-1,1,1,3,3,3-hexafluoropropane, 2,2-bis[4-(4-aminophenoxy)phenyl]-1,1,1,3,3,3-hexafluoropropane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 1,3-bis[4-(4-amino-6-trifluoromethylphenoxy)-α,α-dimethylbenzyl]benzene, 3,3'-bis(trifluoromethyl)-4,4'-diaminobiphenyl, and 2,2'-bis(trifluoromethyl)-4,4'-diaminobiphenyl. At least one aromatic diamine compound to be used is preferably one having a fluoro group, and is particularly preferably 2,2'-bis(trifluoromethyl)-4,4'-diaminobiphenyl. Using an aromatic diamine compound having a fluoro group facilitates the formation of polyimide having transparency, heat resistance, and solubility in a solvent.

Similar to the description of aromatic diamine compound above, any tetracarboxylic dianhydride can be used as long as it is one that gives a polyimide that is soluble in a common solvent (for example, N,N-dimethylacetamide (DMAC)) and has a predetermined transparency. Specific examples of the tetracarboxylic dianhydride include 4,4'-(1,1,1,3,3,3-hexafluoropropane-2,2-diyl)diphthalic acid dianhydride, pyromellitic dianhydride, 3,3',4,4'-benzophenone tetracarboxylic dianhydride, 1,4-hydroquinone dibenzoate-3,3',4,4'-tetracarboxylic dianhydride, 3,3',4,4'-biphenyltetracarboxylic dianhydride, and 3,3',4,4'-diphenylether tetracarboxylic dianhydride. These tetracarboxylic dianhydrides may be used alone or in a combination of two or more. Furthermore, from the viewpoint of transparency, heat resistance, and solubility in a solvent, it is preferable to use a tetracarboxylic dianhydride having at least one type of fluoro group, such as 4,4'-(1,1,1,3,3,3-hexafluoropropane-2,2-diyl)diphthalic acid dianhydride.

The polymerization for preparing polyamic acid can be performed by reacting the aromatic diamine compound and tetracarboxylic dianhydride under their dissolution in a solvent in which the resulting polyamic acid is soluble. Examples of the solvent that can be used as the solvent used in the polymerization for preparing polyamic acid include N,N-dimethylacetamide, N,N-dimethylformamide, N-methyl-2-pyrrolidone, 1,3-dimethyl-2-imidazolidinone, and dimethyl sulfoxide.

The polymerization reaction for preparing polyamic acid is preferably performed while stirring in a reaction vessel provided with a stirring device. Examples include: a method of producing polyamic acid in which the reaction is carried out by dissolving a predetermined amount of an aromatic diamine compound in the solvent and adding a tetracarboxylic dianhydride to the solvent while stirring; a method of producing polyamic acid in which the reaction is carried out by dissolving a tetracarboxylic dianhydride in the solvent and adding an aromatic diamine compound while stirring; and a method of producing polyamide acid in which the reaction is carried out by adding an aromatic diamine compound and a tetracarboxylic dianhydride alternately to the solvent.

While the temperature of the polymerization reaction for preparing polyamic acid is not particularly limited, the polymerization reaction is preferably performed at a temperature from 0 to 70°C, more preferably from 10 to 60°C, and even more preferably from 20 to 50°C. When the polymerization reaction is performed within the ranges described above, a high molecular weight polyamic acid that is less colored and has excellent transparency can be produced.

In addition, while the aromatic diamine compound and tetracarboxylic dianhydride used in the polymerization for preparing polyamic acid are generally used in an equivalent amount, the molar ratio of the tetracarboxylic dianhydride to the aromatic diamine compound can be modified. That is, the molar amount of the tetracarboxylic dianhydride/the molar amount of the aromatic diamine compound, may be modified within a range from 0.95 to 1.05 so as to control the degree of polymerization of the resulting polyamic acid. The molar ratio of the tetracarboxylic dianhydride to the aromatic diamine compound is preferably in a range from 1.001 to 1.02, more preferably from 1.001 to 1.01. Making the tetracarboxylic dianhydride in a slight excess with respect to the aromatic diamine compound, as described above, can stabilize the degree of polymerization of the resulting polyamic acid, and can arrange a unit derived from the tetracarboxylic dianhydride to be placed at the end of the polymer. As a result, a polyimide that is less colored and has excellent transparency can be produced.

The concentration of the resulting polyamic acid solution is preferably adjusted to an appropriate value (for example, approximately from 10 to 30 mass%) so that the viscosity of the solution is properly maintained and thus the solution can be easily handled in a subsequent process.

An imidizing agent is added to the resulting polyamic acid solution and a chemical imidization reaction is carried out. Examples of the imidizing agent include carboxylic anhydrides such as acetic anhydride, propionic anhydride, succinic anhydride, phthalic anhydride, and benzoic anhydride; acetic anhydride is preferred from the viewpoint of cost and ease of removal after reaction. The equivalent weight of the imidizing agent to be used is greater than or equal to the equivalent weight of the amide bond of the polyamic acid that participates in the chemical imidization reaction, and is preferably from 1.1 to 5 times, more preferably from 1.5 to 4 times, the equivalent weight of the amide bond. Using a slight excess of the imidizing agent with respect to the amide bond, as described above, facilitates the efficient imidization reaction even at a relatively low temperature.

Aliphatic, aromatic, or heterocyclic tertiary amines such as pyridine, picoline, quinoline, isoquinoline, trimethylamine, and triethylamine can be used as an imidization accelerator for the chemical imidization reaction. Using these amines facilitates the efficient imidization reaction at a low temperature. As a result, coloration during the imidization reaction can be suppressed and a more transparent polyimide can be formed easily.

While the temperature of the chemical imidization reaction is not particularly limited, the reaction is preferably performed at a temperature of 10°C or higher and lower than 50°C, and more preferably 15°C or higher and lower than

45°C. Performing the chemical imidization reaction at a temperature of 10°C or higher and lower than 50°C can suppress coloration during the imidization reaction, and thus can provide a polyimide with excellent transparency.

Thereafter, if necessary, powder formation and drying are performed; the powder formation is carried out by adding a poor solvent for polyimide to the polyimide solution resulting from the chemical imidization reaction to precipitate the polyimide and form a powder.

The polyimide resin is preferably soluble in an organic solvent with a low boiling point, such as ethyl acetate and methyl ethyl ketone. In particular, the polyimide resin is preferably soluble in methyl ethyl ketone. The polyimide resin soluble in methyl ethyl ketone can easily form a layer of the curable resin composition by coating and drying.

A polyimide resin containing a fluoro group is particularly preferred from the viewpoints that it is easily dissolved in a general-purpose organic solvent with a low boiling point, such as methyl ethyl ketone, and that it facilitates formation of the cured resin layer by a coating method.

The polyimide resin having a fluoro group is preferably an aromatic polyimide resin having a fluoro group in the molecule, and preferably has a skeleton represented by the following chemical formula in the molecule.

[Chem. 1]

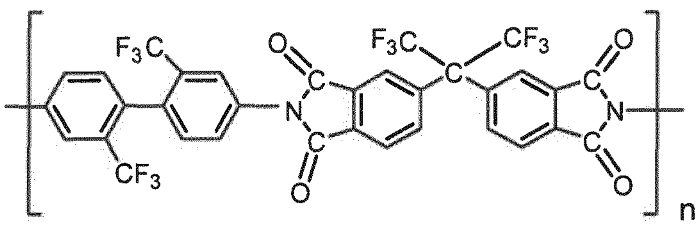

A polyimide resin having a skeleton represented by the above chemical formula has a very high Tg, which is higher than 300°C, due to the high rigidity of the skeleton described above. Thus, this can greatly improve heat resistance of the cured resin layer. In addition, the skeleton described above is straight and has a relatively high flexibility and readily increases the elongation at break of the cured resin layer. Furthermore, the polyimide resin having the skeleton described above has a fluoro group and thus can be dissolved in a general-purpose organic solvent with a low boiling point, such as methyl ethyl ketone. Thus, the cured resin layer can be formed as a coating by performing coating by a solution casting method, and the solvent can also be easily removed by drying. A polyimide resin having the skeleton represented by the chemical formula above can be formed by the polymerization for preparing polyamic acid and imidization reaction described above using 2,2'-bis(trifluoromethyl)-4,4'-diaminobiphenyl and 4,4'-(1,1,1,3,3,3-hexafluoropropane-2,2-diyl)diphthalic acid dianhydride.

The polyarylate resin is a resin made from a polymer compound formed by the reaction between an aromatic diol and an aromatic dicarboxylic acid or a chloride of an aromatic dicarboxylic acid. The polyarylate resin also has a relatively high Tg and relatively good elongation properties. The polyarylate resin is not particularly limited, and a known resin can be used.

Examples of the aromatic diol include: bis(hydroxyphenyl)alkanes, such as bis(4-hydroxyphenyl)methane [bisphenol F], bis(3-methyl-4-hydroxyphenyl)methane, 1,1-bis(4'-hydroxyphenyl)ethane, 1,1-bis(3'-methyl-4'-hydroxyphenyl)ethane, 2,2-bis(4'-hydroxyphenyl)propane [bisphenol A], 2,2-bis(3'-methyl-4'-hydroxyphenyl)propane, 2,2-bis(4'-hydroxyphenyl)butane, and 2,2-bis(4'-hydroxyphenyl)octane; bis(hydroxyphenyl)cycloalkanes, such as 1,1-bis(4'-hydroxyphenyl)cyclopentane, 1,1-bis(4'-hydroxyphenyl)cyclohexane [bisphenol Z], and 1,1-bis(4'-hydroxyphenyl)-3,3,5-trimethylcyclohexane; bis(hydroxyphenyl)phenylalkanes, such as bis(4-hydroxyphenyl)phenylmethane, bis(3-methyl-4-hydroxyphenyl)phenylmethane, bis(2,6-dimethyl-4-hydroxyphenyl)phenylmethane, bis(2,3,6-trimethyl-4-hydroxyphenyl)phenylmethane, bis(3-t-butyl-4-hydroxyphenyl)phenylmethane, bis(3-phenyl-4-hydroxyphenyl)phenylmethane, bis(3-fluoro-4-hydroxyphenyl)phenylmethane, bis(3-bromo-4-hydroxyphenyl)phenylmethane, bis(4-hydroxyphenyl)-4-fluorophenylmethane, bis(3-fluoro-4-hydroxyphenyl)-4-fluorophenylmethane, bis(4-hydroxyphenyl)-4-chlorophenylmethane, bis(4-hydroxyphenyl)-4-bromophenylmethane, bis(3,5-dimethyl-4-hydroxyphenyl)-4-fluorophenylmethane, 1,1-bis(4'-hydroxyphenyl)-1-phenylethane [bisphenol P], 1,1-bis(3'-methyl-4'-hydroxyphenyl)-1-phenylethane, 1,1-bis(3 '-t-butyl-4'-hydroxyphenyl)-1-phenylethane, 1,1-bis(3 '-phenyl-4'-hydroxyphenyl)-1-phenylethane, 1,1-bis(4'-hydroxyphenyl)-1-(4'-nitrophenyl)ethane, 1,1-bis(3 '-bromo-4'-hydroxyphenyl)-1-phenylethane, 1,1-bis(4'-hydroxyphenyl)-1-phenylpropane, bis(4-hydroxyphenyl)diphenylmethane, and bis(4-hydroxyphenyl)dibenzylmethane; bis(hydroxyphenyl)ethers, such as bis(4-hydroxyphenyl)ether and bis(3-methyl-4-hydroxyphenyl)ether; bis(hydroxyphenyl)ketones, such as bis(4-hydroxyphenyl)ketone and bis(3-methyl-4-hydroxyphenyl)ketone; bis(hydroxyphenyl)sulfides, such as bis(4-hydroxyphenyl)sulfide and bis(3-methyl-4-hydroxyphenyl)sulfide; bis(hydroxyphenyl)sulfoxides, such as bis(4-hydroxyphenyl)sulfoxide and bis(3-methyl-4-hydroxyphenyl)sulfoxide; bis(hydroxyphenyl)sulfones, such as bis(4-hydroxyphenyl)sulfone [bisphenol S] and bis(3-methyl-4-hydroxyphenyl)sulfone; and bis(hydroxyphenyl)fluorenes, such as 9,9-bis(4'-hydroxyphenyl)fluorene and 9,9-bis(3'-methyl-4'-hydroxyphenyl)fluorene.

Examples of the aromatic dicarboxylic acid or the chloride of an aromatic dicarboxylic acid include phthalic acid, isophthalic acid, terephthalic acid, 4,4'-biphenyl dicarboxylic acid, diphenoxyethanedicarboxylic acid, diphenyl ether 4,4'-dicarboxylic acid, 4,4'-diphenyl sulfone dicarboxylic acid, 1,5-naphthalenedicarboxylic acid, and 2,6-naphthalenedicarboxylic acid, as well as chlorides of these compounds. Further, the polyarylate resin to be used may be a modified polyarylate resin. Of these, the polyarylate resin is preferably one made from a polymer compound obtained by the reaction between 2,2-bis(4'-hydroxyphenyl)propane and isophthalic acid.

The polymer component (A) can be used alone, or in a combination of two or more. In addition, a polymer component (A') with a glass transition temperature of 250°C or higher and a polymer component (A") with a glass transition temperature lower than 250°C may be used in combination as the polymer components (A). Examples of the polymer component (A") include a polyamide resin; and a polyarylate resin with a Tg lower than 250°C; and a polyamide resin is preferred.

The polyamide resin is preferably soluble in an organic solvent, preferably a rubber-modified polyamide resin. Examples of the rubber-modified polyamide resin that can be used include one described in JP 2004-035638 A.

From the viewpoint that elongation properties can be adjusted and from the viewpoint of solvent resistance, the polymer component (A) and the polymer component (A") are preferably a component formed using a single type of polyimide resin, a component formed using a plurality of different types of polyimide resins, and a component formed by adding at least one of a polyamide resin or a polyarylate resin to the polyimide resin.

When adding a polyamide resin or a polyarylate resin with a Tg lower than 250°C, to a polyimide resin, the amount of resin to be added is preferably 100 parts by mass or less, more preferably 70 parts by mass or less, even more preferably 50 parts by mass or less, and further even more preferably 30 parts by mass or less, and preferably 1 part by mass or greater, more preferably 3 parts by mass or greater, per 100 parts by mass of the polyimide resin, from the viewpoint of imparting appropriate flexibility while maintaining a high Tg.

Curable monomer (B)

The curable monomer (B) is a monomer having a polymerizable unsaturated bond and is a monomer that can participate in a polymerization reaction or a polymerization reaction. Using the curable monomer (B) facilitates the peeling of the cured resin layer from the casting film. In addition, this can provide a laminate for a transparent conductive film, the laminate having excellent solvent resistance.

The cured resin layer is a layer composed of a cured product of the curable resin composition containing the polymer component (A) and the curable monomer (B) described above, and this facilitates the formation of the thin cured resin layer with excellent heat resistance. In addition, using such a material does not cause an optical problem due to a material having anisotropic molecular orientation, such as a polyester-based film commonly used as a substrate for a laminate for a transparent conductive film. Furthermore, the cured resin layer has an absolute value of the thermal deformation rate of 1.2% or lower by a temperature increase to 150°C, thus the cured resin layer exhibits heat resistance. This prevents deterioration of the performance of the transparent conductive layer due to deformation of the cured resin layer or the like by heating when the transparent conductive layer is formed by heating the conductive material layer.

Moreover, according to the study conducted by the present inventors, a resin layer formed by dissolving only the polyimide resin in a solvent without using the curable monomer (B), applying the solution onto a release film made of a silicone resin, which is a common release film, and drying the solution tends to increase haze by the effect of irregularities present on the release film surface. In contrast to this, the combined use with the curable monomer (B) enables the cured resin layer to be easily peeled off even when the cured resin layer is provided on the second surface of the casting film on which a release layer is not provided, and thus this can prevent the increase in haze.

The molecular weight of the curable monomer (B) is usually 3000 or less, preferably from 200 to 2000, and more preferably from 200 to 1000. The curable monomer (B) with a molecular weight in such a range can more efficiently prevent a skinning phenomenon described later when the coating of the curable resin composition is formed.

The number of polymerizable unsaturated bonds in the curable monomer (B) is not particularly limited. The curable monomer (B) may be a monofunctional monomer having one polymerizable unsaturated bond or may be a polyfunctional monomer having a plurality of polymerizable unsaturated bonds, such as a bifunctional or a trifunctional monomer.

Examples of the monofunctional monomer include a monofunctional (meth)acrylic acid derivative.

The monofunctional (meth)acrylic acid derivative is not particularly limited, and a known compound can be used. Examples of the monofunctional (meth)acrylic acid derivative include a monofunctional (meth)acrylic acid derivative having a nitrogen atom, a monofunctional (meth)acrylic acid derivative having an alicyclic structure, and a monofunctional (meth)acrylic acid derivative having a polyether structure.

Examples of the monofunctional (meth)acrylic acid derivative having a nitrogen atom include a compound

represented by the following formula.

[Chem. 2]

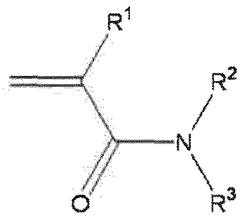

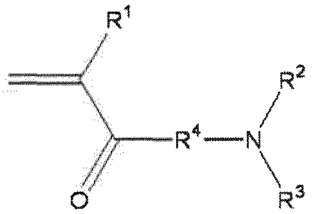

where $R^1$ represents a hydrogen atom or an alkyl group having from 1 to 6 carbons; $R^2$ and $R^3$ each independently represent a hydrogen atom or an organic group having from 1 to 12 carbons, and $R^2$ and $R^3$ may bond to form a ring structure; and $R^4$ represents a divalent organic group.

Examples of the alkyl group having from 1 to 6 carbons represented by $R^1$ include a methyl group, an ethyl group, and a propyl group, of which a methyl group is preferable.

Examples of the organic group having from 1 to 12 carbons represented by $R^2$ and $R^3$ include: an alkyl group having from 1 to 12 carbons, such as a methyl group, an ethyl group, and a propyl group; a cycloalkyl group having from 3 to 12 carbons, such as a cyclopentyl group and a cyclohexyl group; and an aromatic group having from 6 to 12 carbons, such as a phenyl group, a biphenyl group, and a naphthyl group. These groups may have a substituent at any position. Additionally, $R^2$ and $R^3$ may bond together to form a ring, and the ring may further contain a nitrogen atom or an oxygen atom in the skeleton.

Examples of the divalent organic group represented by $R^4$ include groups represented by -(CH2)m- and -NH-(CH2)m-. Here, m is an integer from 1 to 10.

Among these, a preferred example of the monofunctional (meth)acrylic acid derivative having a nitrogen atom is a (meth)acryloyl morpholine represented by the following formula.

[Chem. 3]

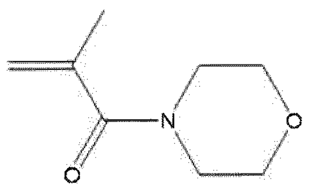

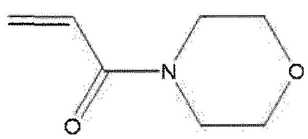

Using a monofunctional (meth)acrylic acid derivative having a nitrogen atom as the curable monomer (B) can form a cured resin layer with even better heat resistance.

Examples of the monofunctional (meth)acrylic acid derivative having an alicyclic structure include a compound represented by the following formula.

[Chem. 4]

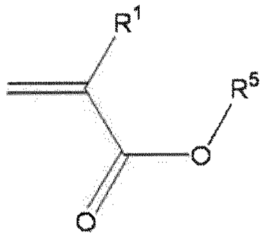

where $R^1$ represents the same as described above, and $R^5$ represents a group having an alicyclic structure.

Examples of the group having an alicyclic structure represented by $R^5$ include a cyclohexyl group, an isobornyl group, a 1-adamantyl group, a 2-adamantyl group, and a tricyclodecanyl group.

Specific examples of the monofunctional (meth)acrylic acid derivative having an alicyclic structure include isobornyl(meth)acrylate, cyclohexyl(meth)acrylate, 1-adamantyl(meth)acrylate, and 2-adamantyl(meth)acrylate.

Using a monofunctional (meth)acrylic acid derivative having an alicyclic structure as the curable monomer (B) can form a cured resin layer with even better optical properties.

Examples of the monofunctional (meth)acrylic acid derivative having a polyether structure include a compound represented by the following formula.

[Chem. 5]

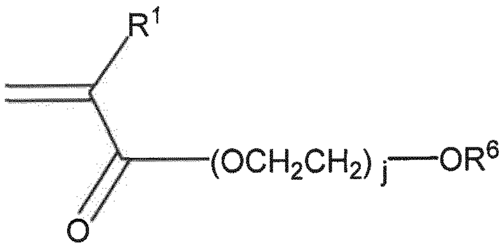

where $R^1$ represents the same as described above, and $R^6$ represents an organic group having from 1 to 12 carbons. Examples of the organic group having from 1 to 12 carbons represented by $R^6$ include: an alkyl group having from 1 to 12 carbons, such as a methyl group, an ethyl group, and a propyl group; a cycloalkyl group having from 3 to 12 carbons, such as a cyclohexyl group; and an aromatic group having from 6 to 12 carbons, such as a phenyl group, a biphenyl group, and a naphthyl group. j represents an integer from 2 to 20.

Specific examples of the monofunctional (meth)acrylic acid derivative having a polyether structure include ethoxylated o-phenylphenol(meth)acrylate, methoxypolyethylene glycol (meth)acrylate, and phenoxypolyethylene glycol (meth)acrylate.

Using a monofunctional (meth)acrylic acid derivative having a polyether structure as the curable monomer (B) can form a cured resin layer with excellent toughness.

Examples of the polyfunctional monomer include a polyfunctional (meth)acrylic acid derivative.

The polyfunctional (meth)acrylic acid derivative is not particularly limited, and a known compound can be used. Examples of the polyfunctional (meth)acrylic acid derivative include a bifunctional to hexafunctional (meth)acrylic acid derivative.

Examples of the bifunctional (meth)acrylic acid derivative include a compound represented by the following formula.

[Chem. 6]

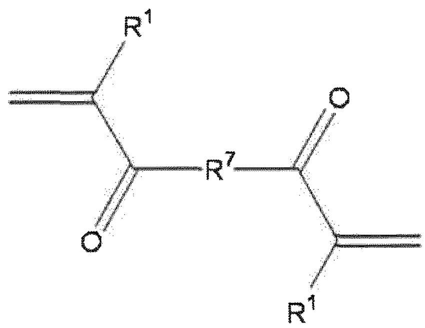

where $R^1$ represents the same as described above, and $R^7$ represents a divalent organic group. Examples of the divalent organic group represented by $R^7$ include a group represented by the following formula.

[Chem. 7]

$$-O-(CH_2)_s-O-$$

$$-O(CH_2CH_2O)_t-$$

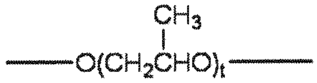

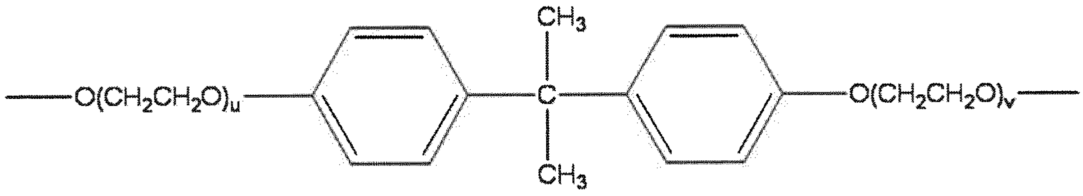

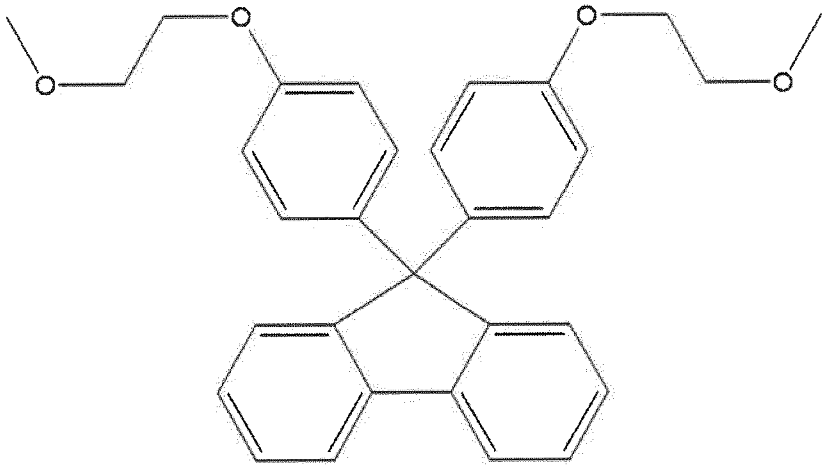

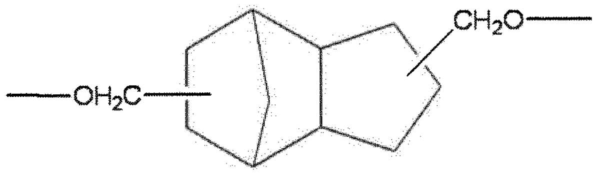

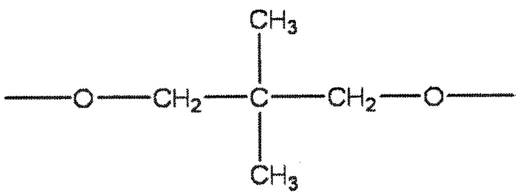

where s represents an integer from 1 to 20, t represents an integer from 1 to 30, u and v each independently represent an integer from 1 to 30, and the "-" at both ends represents a bond.

Specific examples of the bifunctional (meth)acrylic acid derivative represented by the formula above include: tricyclodecane dimethanol di(meth)acrylate, polyethylene glycol di(meth)acrylate, propoxylated ethoxylated bisphenol A di(meth)acrylate, ethoxylated bisphenol A di(meth)acrylate, 1,10-decanediol di(meth)acrylate, 1,6-hexanediol di(meth)acrylate, and 9,9-bis[4-(2-acryloyloxyethoxy)phenyl]fluorene. Among these, the followings are preferred from the viewpoints of heat resistance and toughness: a bifunctional (meth)acrylic acid derivative represented by the formula above where the divalent organic group represented by $R^7$ has a tricyclodecane skeleton, such as tricyclodecane dimethanol di(meth)acrylate; a bifunctional (meth)acrylic acid derivative represented by the formula above where the divalent organic group represented by $R^7$ has a bisphenol skeleton, such as propoxylated ethoxylated bisphenol A di(meth)acrylate and ethoxylated bisphenol A di(meth)acrylate; and a bifunctional (meth)acrylic acid derivative represented by the formula above where the divalent organic group represented by $R^7$ has a 9,9-bisphenylfluorene skeleton, such as 9,9-bis[4-(2-acryloyloxyethoxy)phenyl]fluorene.

Additional examples of the bifunctional (meth)acrylic acid derivative include neopentyl glycol adipate di(meth)acrylate, hydroxypivalic acid neopentyl glycol di(meth)acrylate, caprolactone-modified dicyclopentenyl di(meth)acrylate, ethylene oxide-modified phosphoric acid di(meth)acrylate, di(acryloxyethyl)isocyanurate, and allylated cyclohexyl di(meth)acrylate.

Examples of the trifunctional (meth)acrylic acid derivative include trimethylolpropane tri(meth)acrylate, pentaerythritol tri(meth)acrylate, propionic acid-modified dipentaerythritol tri(meth)acrylate, propylene oxide-modified trimethylolpropane tri(meth)acrylate, and tris(acryloxyethyl)isocyanurate.

Examples of the tetrafunctional (meth)acrylic acid derivative include pentaerythritol tetra(meth)acrylate.

Examples of the pentafunctional (meth)acrylic acid derivative include propionic acid-modified dipentaerythritol penta(meth)acrylate.

Examples of the hexafunctional (meth)acrylic acid derivative include dipentaerythritol hexa(meth)acrylate and caprolactone-modified dipentaerythritol hexa(meth)acrylate.

A cyclopolymerization monomer may also be used as the curable monomer (B). A cyclopolymerization monomer is a monomer having the property of undergoing cyclization and radical polymerization at the same time. Examples of the cyclopolymerization monomer include a non-conjugated diene, such as $\alpha$-allyloxymethylacrylic acid-based monomers, preferably an alkyl ester having from 1 to 4 carbons of 2-allyloxymethyl acrylic acid and cyclohexyl 2-allyloxymethyl acrylate, more preferably an alkyl ester having from 1 to 4 carbons of 2-allyloxymethyl acrylic acid, and even more preferably methyl 2-(allyloxymethyl) acrylate.

Additional examples of the cyclopolymerization monomer that can be used include dimethyl-2,2'-[oxybis(methylene)]bis-2-propenoate, diethyl-2,2'-[oxybis(methylene)]bis-2-propenoate, di(n-propyl)-2,2'-[oxybis(methylene)]bis-2-propenoate, di(i-propyl)-2,2'-[oxybis(methylene)]bis-2-propenoate, di(n-butyl)-2,2'-[oxybis(methylene)]bis-2-propenoate, di(n-hexyl)-2,2'-[oxybis(methylene)]bis-2-propenoate, and dicyclohexyl-2,2'-[oxybis(methylene)]bis-2-propenoate.

One curable monomer (B) can be used alone or two or more in combination.

Of these, the curable monomer (B) is preferably a polyfunctional monomer from the viewpoint that a cured resin layer having even better heat resistance and solvent resistance is obtained. The polyfunctional monomer is preferably a bifunctional (meth)acrylic acid derivative from the viewpoint that it is easy to mix with the polymer component (A) and that curing shrinkage of the polymer is unlikely to occur while curling of the cured product can be suppressed.

The curable monomer (B) more preferably contains a polyfunctional (meth)acrylate compound and a cyclopolymerization monomer. The combined use of these appropriately adjusts the heat resistance of the cured resin layer and makes it easier to adjust the elongation at break of the cured resin layer to a predetermined range.

When the curable monomer (B) contains a polyfunctional monomer, the content of the polyfunctional monomer is preferably 40 mass% or greater, more preferably from 50 to 100 mass%, of the total mass of the curable monomer (B).

Curable resin composition

The curable resin composition to be used to form the cured resin layer according to an embodiment of the present invention can be prepared by mixing the polymer component (A), the curable monomer (B), and if desired a polymerization initiator or another component described later, and dissolving or dispersing the mixture in a suitable solvent.

The total content of the polymer component (A) and the curable monomer (B) in the curable resin composition is preferably from 40 to 99.5 mass%, more preferably from 60 to 99 mass%, and even more preferably from 80 to 98 mass% relative to the total mass of the curable resin composition excluding the solvent.

The content of the polymer component (A) and the curable monomer (B) in the curable resin composition is, in terms of a mass ratio of the polymer component (A) to the curable monomer (B), preferably from 30:70 to 90:10, and more preferably from 35:65 to 80:20.

The curable resin composition with a mass ratio of the polymer component (A) to the curable monomer (B) in such a range tends to further improve the flexibility of the resulting cured resin layer and maintain the solvent resistance of the cured resin layer.

In addition, with a content of the curable monomer (B) in the curable resin composition in the above range, the solvent can be efficiently removed when the cured resin layer is formed, for example, by a solution casting method. Thus, this eliminates a deformation problem, such as curl or waviness, due to the prolonged time of the drying process.

When a plurality of resins having different solvent solubility are used in combination as the polymer component

(A), such as a combination of a polyimide resin and a polyamide resin or a polyarylate resin described above, it is preferable to first dissolve the resins in their corresponding suitable solvents separately, and then add a solution, in which one resin is dissolved, to an organic solvent having a low boiling point, in which another resin is dissolved.

The curable resin composition can optionally contain a polymerization initiator. The polymerization initiator is not particularly limited as long as it is one that initiates a curing reaction. Examples of the polymerization initiator include a thermal polymerization initiator and a photopolymerization initiator.

Examples of the thermal polymerization initiator include an organic peroxide and an azo compound.

Examples of the organic peroxide include: dialkyl peroxides, such as di-t-butyl peroxide, t-butyl cumyl peroxide, and dicumyl peroxide; diacyl peroxides, such as acetyl peroxide, lauroyl peroxide, and benzoyl peroxide; ketone peroxides, such as methyl ethyl ketone peroxide, cyclohexanone peroxide, 3,3,5-trimethylcyclohexanone peroxide, and methyl cyclohexanone peroxide; peroxy ketals, such as 1,1-bis(t-butylperoxy)cyclohexane; hydroperoxides, such as t-butyl hydroperoxide, cumene hydroperoxide, 1,1,3,3-tetramethylbutyl hydroperoxide, p-menthane hydroperoxide, diisopropylbenzene hydroperoxide, and 2,5-dimethylhexane-2,5-dihydroperoxide; and peroxy esters, such as t-butyl peroxyacetate, t-butyl peroxy-2-ethylhexanoate, t-butyl peroxybenzoate, and t-butylperoxy isopropyl carbonate.

Examples of the azo compound include 2,2'-azobis(4-methoxy-2,4-dimethylvaleronitrile), 2,2'-azobis(2-cyclopropylpropionitrile), 2,2'-azobis(2,4-dimethylvaleronitrile), azobisisobutyronitrile, 2,2'-azobis(2-methylbutyronitrile), 1,1'-azobis(cyclohexane-1-carbonitrile), 2-(carbamoylazo)isobutyronitrile, and 2-phenylazo-4-methoxy-2,4-dimethylvaleronitrile.

Examples of the photopolymerization initiator include: alkylphenone-based photopolymerization initiators, such as 2,2-dimethoxy-1,2-diphenylethan-1-one, 1-hydroxy-cyclohexyl-phenyl ketone, 2-hydroxy-2-methyl-1-phenyl-propan-1-one, 1-[4-(2-hydroxyethoxy)-phenyl] -2-hydroxy-2-methyl-1 -propan-1-one, 2-hydroxy-1-[4-[4-(2-hydroxy-2-methylpropionyl)-benzyl]phenyl]-2-methyl-propan-1-one, 2-methyl-1-(4-methylthiophenyl)-2-morpholinopropane-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone; phosphorus-based photopolymerization initiators, such as 2,4,6-trimethylbenzoyl-diphenylphosphineoxide, bis(2,4,6-trimethylbenzoyl)-phenylphosphineoxide, ethyl(2,4,6-trimethylbenzoyl)-phenylphosphinate, and bis(2,6-dimethoxybenzoyl)-2,4,4-trimethyl-pentylphosphine oxide; titanocene-based photopolymerization initiators, such as bis($\eta^5$-2,4-cyclopentadiene-1-yl)-bis[2,6-difluoro-3-(1H-pyrrol-1-yl)-phenyl] titanium; oxime ester-based photopolymerization initiators, such as 1,2-octanedione-1-[4-(phenylthio)-2-(O-benzoyloxyme)] and ethanone-1-[9-ethyl-6-(2-methylbenzoyl)-9H-carbazole-3-yl]-1-(O-acetyloxyme); benzophenone-based photopolymerization initiators, such as benzophenone, p-chlorobenzophenone, benzoylbenzoic acid, methyl o-benzoylbenzoate, 4-methylbenzophenone, 4-phenylbenzophenone, hydroxybenzophenone, acrylated benzophenone, 4-benzoyl-4'-methyl-diphenyl sulfide, 3,3'-dimethyl-4-methoxybenzophenone, 2,4,6-trimethylbenzophenone, and 4-(13 -acryloyl-1,4,7,10,13 -pentaoxatridecyl)-benzophenone; and thioxanthone-based photopolymerization initiators, such as thioxanthone, 2-chlorothioxanthone, 3-methylthioxanthone, 2,4-dimethylthioxanthone, 2,4-diisopropylthioxanthone, 2,4-dichlorothioxanthone, 1-chloro-4-propoxythioxanthone, 2-methylthioxanthone, 2-isopropylthioxanthone, and 4-isopropylthioxanthone.

Among the photopolymerization initiators described above, phosphorus-based photopolymerization initiators, such as 2,4,6-trimethylbenzoyl-diphenylphosphineoxide, bis(2,4,6-trimethylbenzoyl)-phenylphosphineoxide, ethyl(2,4,6-trimethylbenzoyl)-phenylphosphinate, and bis(2,6-dimethoxybenzoyl)-2,4,4-trimethyl-pentylphosphine oxide, are preferred.

When the polymer component (A) is a thermoplastic resin having an aromatic ring, the polymer component (A) absorbs ultraviolet light and, as a result, curing reaction may be difficult to occur. However, using a phosphorous-based photopolymerization initiator described above facilitates efficient curing reaction by utilizing light having a wavelength that is not absorbed by the polymer component (A).

The polymerization initiator can be used alone or in a combination of two or more.

The content of the polymerization initiator is preferably from 0.05 to 15 mass%, more preferably from 0.05 to 10 mass%, and even more preferably from 0.05 to 5 mass% relative to the total amount of the curable resin composition.

In addition to the polymer component (A), the curable monomer (B), and the polymerization initiator, the curable resin composition may also contain a photopolymerization initiator aid, such as triisopropanolamine and 4,4'-diethylaminobenzophenone.

The solvent used to prepare the curable resin composition is not particularly limited, and examples include: aliphatic hydrocarbon solvents, such as n-hexane and n-heptane; aromatic hydrocarbon solvents, such as toluene and xylene; halogenated hydrocarbon solvents, such as dichloromethane, ethylene chloride, chloroform, carbon tetrachloride, 1,2-dichloroethane, and monochlorobenzene; alcohol-based solvents, such as methanol, ethanol, propanol, butanol, and propylene glycol monomethyl ether; ketone solvents, such as acetone, methyl ethyl ketone, 2-pentanone, isophorone, and cyclohexanone; ester-based solvents, such as ethyl acetate and butyl acetate; cellosolve solvents, such as ethyl cellosolve; and ether-based solvents, such as 1,3-dioxolane.

The content of the solvent in the curable resin composition is not particularly limited, but is usually from 0.1 to 1000 g, preferably from 1 to 100 g, per g of the polymer component (A). As the amount of the solvent is adjusted

appropriately, the viscosity of the curable resin composition can be adjusted to an appropriate value.

Furthermore, the curable resin composition may further contain a known additive such as a plasticizer, an antioxidant, and an ultraviolet absorber, within a range that does not impair the object and effect of the present invention.

The method of curing the curable resin composition can be determined according to the polymerization initiator or curable monomer used. The details will be described in the section of a method of manufacturing a laminate for a transparent conductive film.

Properties of cured resin layer, etc.

The thickness of the cured resin layer is 20 μm or less, preferably 15 μm or less, more preferably 12 μm or less, and even more preferably 10 μm or less. The lower limit of the thickness of the cured resin layer is not particularly limited but is typically 0.1 μm or greater and preferably 0.2 μm or greater.

The cured resin layer with a thickness of 20 μm or less makes it easy to obtain a thin and lightweight laminate for forming a transparent conductive film and can form a laminate for forming a transparent conductive film, the laminate with excellent handling properties.

In addition, the cured resin layer is thin, and thus this can provide a transparent conductive film having high transparency as well as being thin and light weight. Thus, in applications where thinner devices are required, such as those in organic EL displays, the transparent conductive film will not be a factor for increasing the overall thickness of a device to which the transparent conductive film is applied; thus, this is preferred. In addition, the thin transparent conductive film can improve the flexibility and bending resistance after the transparent conductive film is mounted.

As described above, the cured resin layer included in the laminate for forming a transparent conductive film according to an embodiment of the present invention has an absolute value of the thermal deformation rate of 1.2% or lower by a temperature increase to 150°C. Thus, the cured resin layer has excellent heat resistance, and this can provide a laminate for forming a transparent conductive film, the laminate with excellent heat resistance.

In particular, the cured resin layer has high heat resistance and thus is unlikely to cause a problem even when the laminate for forming a transparent conductive film is produced through a process involving heating after the formation of the cured resin layer, such as forming the conductive material layer on the cured resin layer by sputtering, vapor deposition, coating, or the like, and further heating the conductive material layer to form the transparent conductive layer. This can avoid failure due to deformation of the cured resin layer or the like; specifically, the failure in which the transparent conductive layer cannot be well formed, or the transparent conductive layer cannot exhibit sufficient electrical properties. From a similar viewpoint, the absolute value of the thermal deformation rate of the cured resin layer by a temperature increase to 150°C is preferably 0.8% or lower.

The thermal deformation rate of the cured resin layer is a characteristic value measured by a method described in Examples below. In Examples, the cured resin layer is measured by adjusting the thickness of the cured resin layer to 20 μm; however, when the cured resin layer is attached to a jig of a thermomechanical analyzer, the cured resin layer is elongated. To avoid such a problem, the cured resin layer is measured by laminating the cured resin layers to a thickness of 20 μm or greater.

As described later, the cured resin layer can be easily formed by curing a coating obtained by applying the curable resin composition onto the casting film. From this viewpoint, the cured resin layer is preferably a cured product of a coating of the curable resin composition formed on a surface (second surface) of the casting film, the surface not provided with a release layer.

The cured resin layer also has excellent solvent resistance. Because of this excellent solvent resistance, the cured resin layer surface hardly dissolves, for example, even when an organic solvent is used in forming another layer on the cured resin layer surface. Thus, for example, even when the transparent conductive layer is formed on the cured resin layer surface by a coating method using a resin solution containing an organic solvent, a component of the cured resin layer is unlikely to mix in the transparent conductive layer, and thus electrical properties of the transparent conductive layer is unlikely to deteriorate.

From such a viewpoint, the gel fraction of the cured resin layer is preferably 90% or higher and more preferably 94% or higher. The cured resin layer with a gel fraction of 90% or higher has excellent solvent resistance, thus the cured resin layer surface hardly dissolves even when an organic solvent is used in forming another layer on the cured resin layer surface by coating. This makes it easier to obtain a laminate for a transparent conductive film, the laminate with excellent solvent resistance.

Here, the gel fraction is determined as follows: a cured resin layer cut to 100 mm × 100 mm is wrapped with a 150 mm × 150 mm nylon mesh (#120) whose mass has been measured in advance, immersed in toluene (100 mL) for 3 days, taken out, dried at 120°C for 1 hour, then allowed to stand under conditions of 23°C and a relative humidity of 50% for 3 hours for conditioning, the mass is measured, and then the gel fraction is calculated by the following equation.

$$\text{Gel fraction (\%)} = [(\text{mass of remaining resin after immersion})/(\text{mass of resin before immersion})] \times 100$$

The cured resin layer has excellent interlayer adhesion with the transparent conductive layer. That is, the transparent conductive layer can be formed without providing an anchor coat layer on the cured resin layer.

The cured resin layer is preferably colorless and transparent. The cured resin layer is colorless and transparent, and thus the laminate for forming a transparent conductive film according to an embodiment of the present invention can be preferably used in optical applications.

The cured resin layer has a low birefringence and excellent optical isotropy. The in-plane phase difference of the cured resin layer is typically 20 nm or less and preferably 15 nm or less. The phase difference in the thickness direction is typically -500 nm or less and preferably -450 nm or less. In addition, the value (birefringence) obtained by dividing the in-plane phase difference by the thickness of the cured resin layer is typically $100 \times 10^{-5}$ or lower and preferably $20 \times 10^{-5}$ or lower.

The cured resin layer with an in-plane phase difference, a phase difference in the thickness direction, and an birefringence in the above ranges provides a laminate for forming a transparent conductive film, the laminate having low birefringence and excellent optical isotropy, and a transparent conductive film produced using this laminate for forming a transparent conductive film can be preferably used in optical applications.

The elongation at break of the cured resin layer is preferably 2.5% or higher, more preferably 2.6% or higher, and even more preferably 2.7% or higher. The cured resin layer with an elongation at break of 2.5% or higher makes it easier to adjust the elongation at break of the laminate for forming a transparent conductive film to approximately 2% or higher and consequently makes it easy to obtain a laminate for forming a transparent conductive film, the laminate with excellent flexibility.

1-2. Casting film

The casting film has a role of protecting the cured resin layer and another layer optionally provided described later when the laminate for forming a transparent conductive film or the transparent conductive film described later is, for example, stored or transported, and is peeled off in a predetermined process.

The casting film has, for example, a substrate layer. The casting film may be provided with another layer other than the substrate layer, but when a release layer is provided on one surface (first surface) of the casting film, the cured resin layer described above is provided on a surface (second surface) of the casting film, the surface opposite from the surface on which the release layer is provided. In Fig. 1(a) and Fig. 1(b) described above, the first surfaces of the casting films 1 and 1A are indicated by a reference sign S1, and the second surfaces of the casting films 1 and 1A are indicated by a reference sign S2.

The laminate for a transparent conductive film has a casting film, and thus this protects the cured resin layer and can form the laminate for forming a transparent conductive film with high handling properties. In addition, applying the curable resin composition to the casting film provided with a release layer on the surface may fail to form a uniform coating. In a manufacturing process of the laminate for a transparent conductive film according to an embodiment of the present invention, the curable resin composition is applied onto the second surface of the casting film, the surface not provided with a release layer, and this can provide a uniform coating. The laminate for forming a transparent conductive film may have the casting film on one surface of the cured resin layer as illustrated in Fig. 1(a) or may have casting films on both surfaces of the cured resin layer as illustrated in Fig. 1(b). In the latter case, two types of casting films are used, and the casting film to be peeled off first is preferably more easily peel off than the other. In this case, at least any one of the casting films 1A and 1B has a second surface having no release layer, and the cured resin layer is formed on the second surface. When the curable resin composition is applied onto the casting film to form the cured resin layer, the coating of the curable resin composition is preferably formed on the second surface of the casting film having the second surface among the casting films 1A and 1B to obtain a uniform coating.

The casting film is preferably in the shape of a sheet or a film. The shape of a sheet or a film is not limited to an elongated shape and also includes the shape of a short flat plate.

Examples of the substrate layer of the casting film include paper substrates, such as glassine paper, coat paper, and wood-free paper; laminated paper in which a thermoplastic resin, such as polyethylene or polypropylene, is laminated on a paper substrate of those described above; those formed by sealing a paper substrate of those described above with, for example, cellulose, starch, poly(vinyl alcohol), or an acrylic-styrene resin; plastic films, such as polyester films (such as poly(ethylene terephthalate), poly(butylene terephthalate), and poly(ethylene naphthalate)) and polyolefin films (such as polyethylene and polypropylene); and glass.

In addition, the casting film may have a release layer but in this case on only one surface (first surface) of two

surfaces.

The release layer can be formed using a known release agent, such as a silicone-based release agent, a fluorine-based release agent, an alkyd-based release agent, and an olefin-based release agent.

The thickness of the release layer is not particularly limited but is typically from 0.02 to 2.0 μm and more preferably from 0.05 to 1.5 μm.

From the viewpoint of ease of handling, the thickness of the casting film is preferably from 1 to 500 μm and more preferably from 5 to 300 μm.

1-3. Another layer

The casting film may have a layer other than a release layer, such as, for example, a primer layer or an antistatic layer, but a layer other than the release layer is preferably not provided on the second surface on which the release layer is not provided.

Of the constituent layers of the laminate for forming a transparent conductive film, a portion (separation layer) to be peeled off from the casting film in a predetermined process includes the cured resin layer. The cured resin layer is laminated on the casting film without interposition of another layer, and thus the cured resin layer is located on one outermost surface of the separation layer. On the other surface side of the separation layer may be provided a layer other than the cured resin layer, such as a primer layer or an antistatic layer, but the separation layer is preferably thin because it is a layer constituting the transparent conductive film after removing the casting film, and thus the number and thickness of the layers other than the cured resin layer are preferably minimized.

2. Transparent conductive film

The transparent conductive film according to an embodiment of the present invention includes the casting film, the cured resin layer, and the transparent conductive layer in this order. In the actual use of the transparent conductive film, the casting film is peeled off from the transparent conductive film, and the transparent conductive film is used by incorporating into a display or a solar panel or by attaching to a substrate of a touch sensor for a touch panel. For the method of applying the transparent conductive film to the portion to which the transparent conductive film is to be applied, for example, when the transparent conductive film has an adhesive layer as described later, the transparent conductive film is attached with the adhesive layer to the portion to which the transparent conductive film is to be applied, and after the application, the casting film is peeled off.

A specific example of a configuration of the transparent conductive film according to an embodiment of the present invention is illustrated in Fig. 2.

A transparent conductive film 20 illustrated in Fig. 2(a) has a transparent conductive layer 3 on one surface of the cured resin layer 2 and has the casting film 1 on a surface of the cured resin layer 2, the surface opposite from the transparent conductive layer 3.

The transparent conductive layer 3 is formed, for example, to cover the entire surface of the cured resin layer 2. In addition, the transparent conductive layer 3 can be patterned into a desired shape by an appropriate method, such as etching. A transparent conductive film 21 illustrated in Fig. 2(b) has a pattern-formed transparent conductive layer 31 on one surface of the cured resin layer 2. The transparent conductive layer 31 having a desired pattern shape may be formed on the cured resin layer 2 by selectively placing a transparent conductive material on the cured resin layer 2 without going through a process, such as etching.

Peeling off the casting film 1 from the transparent conductive film in the state illustrated in Fig. 2 would result in poor handling properties. Thus, the casting film 1 is preferably peeled off and removed after the transparent conductive film is applied to a portion of an adherend or the like, the portion to which the transparent conductive film is to be applied.

The thickness of the transparent conductive film can be appropriately determined according to the target application or the like. The substantial thickness of the transparent conductive film according to an embodiment of the present invention is, from the viewpoint of handling properties, preferably from 0.3 to 50 μm, more preferably from 0.5 to 25 μm, and more preferably from 0.7 to 12 μm.

The "substantial thickness" refers to the thickness in a use state. That is, the transparent conductive film has the casting film, but the thickness of the portion (such as the casting film) to be removed in use is not included in the "substantial thickness".

In the present specification, "transparent" in the transparent conductive film means that the light transmittance at a wavelength of 450 nm is 80% or higher.

The transparent conductive film according to an embodiment of the present invention has low birefringence and excellent optical isotropy.

The in-plane phase difference of the transparent conductive film is typically 20 nm or lower and preferably 15 nm or lower. The phase difference in the thickness direction is typically -500 nm or less and preferably -450 nm or less.

In addition, the value (birefringence) obtained by dividing the in-plane phase difference by the thickness of the transparent conductive film is typically 100 × $10^{-5}$ or lower and preferably 20 × $10^{-5}$ or lower.

With the in-plane phase difference and the phase difference in the thickness direction of the transparent conductive film in the above ranges, the transparent conductive film according to an embodiment of the present invention has excellent optical isotropy and can be preferably used in optical applications.

Examples of the conductive material constituting the transparent conductive layer include a metal, an alloy, a metal oxide, an electrically conductive compound, and a mixture of these. Specific examples include: antimony-doped tin oxide (ATO); fluorine-doped tin oxide (FTO); a semi-conductive metal oxide, such as tin oxide, germanium-doped zinc oxide (GZO), zinc oxide, indium oxide, indium tin oxide (ITO), and indium zinc oxide (IZO); a metal such as gold, silver, chromium, and nickel; a mixture of these metals and conductive metal oxides; an inorganic conductive substance such as copper iodide and copper sulfide; and an organic conductive material such as polyaniline, polythiophene, and polypyrrole. The metal, such as silver, may constitute a transparent conductive layer by aggregation of the metal in the particulate state, such as nanofiller, nanorod, or nanofiber.

The method of forming the transparent conductive layer is not particularly limited. Examples include vapor deposition, sputtering, ion plating, thermal CVD, and plasma CVD. In addition, the transparent conductive film may be obtained from a coating, for example, by applying a coating material containing a metal in the particulate form to the laminate for a transparent conductive film.

The thickness of the transparent conductive layer is appropriately selected according to the application or the like. The thickness of the transparent conductive layer is typically from 10 nm to 50 μm and preferably from 20 nm to 20 μm.

The transparent conductive film according to an embodiment of the present invention is not limited to the transparent conductive film having the configuration illustrated in Fig. 2 and may further contain one or two or more other layers in a range that does not impair the object of the present invention.

Examples of another layer include a shock absorbing layer and an adhesive layer. The position of another layer to be placed is not particularly limited.

The shock absorbing layer is a layer to protect the transparent conductive layer when an impact is applied to the transparent conductive layer. The material for forming the shock absorbing layer is not particularly limited, and examples include an acrylic resin, a urethane resin, a silicone resin, an olefin resin, and a rubber material.

The method of forming the shock absorbing layer is not particularly limited, and examples include a method of coating a layer to be laminated with a shock absorbing layer forming solution containing a material forming the shock absorbing layer and, optionally, another component such as a solvent, drying the resulting coating, and performing heating and the like as necessary.

Alternatively, the shock absorbing layer may be formed separately on a release substrate as a film, and the resulting film may be transferred and laminated onto the layer to be laminated.

The thickness of the shock absorbing layer is typically from 1 to 100 μm, preferably from 5 to 50 μm.

The adhesive layer is a layer to be used when the transparent conductive film is attached to an adherend. The material for forming the adhesive layer is not particularly limited, and a known adhesive or pressure-sensitive adhesive, such as an acrylic-based adhesive or pressure-sensitive adhesive, a silicone-based adhesive or pressure-sensitive adhesive, and a rubber-based adhesive or pressure-sensitive adhesive, and a heat sealing material can be used. For the transparent conductive film in which the adhesive layer is formed on the opposite side of the cured resin layer, the side opposite from the surface facing the casting film, a thin coating having the cured resin layer and the transparent conductive layer can be easily formed on an adherend by attaching the transparent conductive film laminate to the adherend by the adhesive layer, and then peeling off the casting film. In the present invention, the casting film is flexible, and thus this facilitates such an attachment and peeling off of the casting film. The transparent conductive film may have a release film for protecting the adhesive layer on the opposite side of the adhesive layer, the side opposite from the side facing the cured resin layer. This allows the transparent conductive film to have the casting films and the release films on the outermost layers on both sides and thus to be easily handled.

3. Method of manufacturing laminate for forming transparent conductive film

The laminate for forming a transparent conductive film according to an embodiment of the present invention is manufactured using the casting film. Using the casting film enables the laminate for forming a transparent conductive film to be manufactured efficiently and easily. In particular, a method having Steps 1 and 2 below is preferred.

Step 1: forming a curable resin layer on the casting film using the curable resin composition containing the polymer component (A) and the curable monomer (B)
Step 2: curing the curable resin layer obtained in Step 1 to form the cured resin layer

An example of the manufacturing process of the laminate for a transparent conductive film according to an

embodiment of the present invention is illustrated in Fig. 3. Fig. 3(a) illustrates a state before forming the curable resin layer, Fig. 3(b) corresponds to Step 1 above, and Fig. 3(c) corresponds to Step 2 above. In Figs. 3(a) to 3(c), in the same manner as in Fig. 1(a), the first surface of the casting film 1 is indicated by a reference sign S1, and the second surface of the casting film 1 is indicated by a reference sign S2.

Step 1

First, the curable resin layer (indicated by the reference sign 2a in Fig. 3(b)) is formed on a surface (second surface) of the casting film (indicated by the reference sign 1 in Fig. 3(a)) using the curable resin composition containing the polymer component (A) and the curable monomer (B). The method of forming the curable resin layer is preferably coating.

The method of applying the curable resin composition onto the casting film is not particularly limited, and a known coating method, such as a spin coating method, a spray coating method, a bar coating method, a knife coating method, a roll coating method, a blade coating method, a die coating method, or a gravure coating method, can be used. Applying the curable resin composition to the second surface of the casting film facilitates obtaining a uniform coating.

The method of drying the resulting coating is not particularly limited, and a known drying method such as hot air drying, hot roll drying, and infrared irradiation can be used. Forming the resin layer by dissolving the polymerizable component (A) alone in a solvent without using the curable monomer (B) would be likely to cause a phenomenon in which the surface of the resin layer is dried before and the solvent remains inside the resin layer (what is called "skinning"). As described above, the cured resin layer according to an embodiment of the present invention has a small thermal deformation rate, and the polymer component (A) contained in the curable resin composition used to form this cured resin layer generally has high Tg. In this case, the skinning phenomenon described above would be particularly likely to occur. However, the curable resin composition contains the curable monomer (B), and this maintains the fluidity of the resin composition and can efficiently remove the solvent also from the inside of the resin layer when the coating obtained by a solution casting method is dried.

The drying temperature of the coating is typically from 30 to 150°C and preferably from 50 to 100°C.

The thickness of the dried coating (curable resin layer) is not particularly limited, but the thickness is almost not different from the thickness after curing, and thus the thickness is the same as the thickness of the curable resin layer described above.

Step 2

Next, the curable resin layer formed in Step 1 is cured, and a cured resin layer is formed. This cured resin layer is the cured resin layer (indicated by the reference sign 2 in Fig. 3(c)).

The method of curing the curable resin layer is not particularly limited, and a known method can be used. For example, when the curable resin layer is formed using a curable resin composition containing a thermal polymerization initiator, the curable resin layer can be cured by heating the curable resin layer. The heating temperature is usually from 30 to 150°C, preferably from 50 to 100°C.

Furthermore, when the curable resin layer is formed using a curable resin composition containing a photopolymerization initiator, the curable resin layer can be cured by irradiating the curable resin layer with an active energy ray. For the active energy ray irradiation, for example, a high-pressure mercury lamp, an electrodeless lamp, or a xenon lamp can be utilized.

The wavelength of the active energy ray is preferably from 200 to 400 nm, more preferably from 350 to 400 nm. The intensity is usually from 50 to 1000 mW/cm$^2$, and the amount of light is usually from 50 to 5000 mJ/cm$^2$, preferably from 1000 to 5000 mJ/cm$^2$. The duration of irradiation is usually from 0.1 to 1000 seconds, preferably from 1 to 500 seconds, and even more preferably from 10 to 100 seconds. The active energy ray may be applied a plurality of times so that the amount of light falls within the above range taking account of the thermal load during the irradiation process.

In this case, the curable resin composition may be irradiated with the active energy ray through a filter that absorbs light at a wavelength not necessary for the curing reaction to prevent degradation of the polymer component (A) and coloration of the cured resin layer due to the active energy ray irradiation. According to this method, light at a wavelength that is not necessary for the curing reaction and degrades the polymer component (A) is absorbed by the filter, and thus this prevents degradation of the polymer component (A) and makes it easier to obtain a colorless and transparent cured resin layer.

A resin film such as a poly(ethylene terephthalate) film can be used as the filter. When a resin film is used, it is preferable to provide a process of laminating a resin film, such as a poly(ethylene terephthalate) film, on the curable resin layer between Step 1 and Step 2. The resin film is typically peeled off after Step 2.

Furthermore, the curable resin layer can be cured by irradiating the curable resin layer with an electron beam.

In a case where the curable resin layer is irradiated with an electron beam, the curable resin layer usually can be cured without the use of a photopolymerization initiator. In a case where the curable resin layer is irradiated with an electron beam, an electron beam accelerator or the like can be used. The dose is usually in a range from 10 to 1000 krad. The duration of irradiation is usually from 0.1 to 1000 seconds, preferably from 1 to 500 seconds, and even more preferably from 10 to 100 seconds.

Curing of the curable resin layer may be carried out in an atmosphere of an inert gas such as nitrogen gas as necessary. When curing is carried out in an atmosphere of an inert gas, it is easy to prevent oxygen, moisture, and the like from hindering the curing.

4. Method of manufacturing transparent conductive film

A method of manufacturing a transparent conductive film according to an embodiment of the present invention is preferably a method including Steps 3 and 4 below.

Step 3: forming a conductive material layer on the cured resin layer of the laminate for a transparent conductive film
Step 4: heating the conductive material layer obtained in Step 3 to 140°C or higher to form a transparent conductive layer

The method of manufacturing a transparent conductive film according to an embodiment of the present invention may be a method including Step 5 below.
Step 5: patterning the transparent conductive layer obtained in Step 4 into a predetermined shape

An example of the manufacturing process of the transparent conductive film according to an embodiment of the present invention is illustrated in Fig. 4. Fig. 4(a) illustrates a laminate for a transparent conductive film before a conductive material is placed. Fig. 4(b) corresponds to Step 3 above, Fig. 4(c) corresponds to Step 4 above, and Fig. 4(d) corresponds to Step 5 above.

Step 3

The conductive material layer (indicated by a reference sign 3a in Fig. 4(b)) is placed on the cured resin layer obtained in Step 2.

For the method of providing the conductive material layer, a PVD method or a CVD method, such as, for example, a sputtering method, an EB vapor deposition method, or an ion plating method, can be employed.

A method of forming the conductive material layer by applying a composition containing a conductive material and a solution onto the cured resin layer and drying can be used.

The conductive material layer is formed, for example, to cover the entire surface of the cured resin layer.

Step 4

In Step 4, the conductive material layer formed in Step 3 is heated to 140°C or higher to crystallize the conductive material to form the transparent conductive layer (indicated by a reference sign 3 in Fig. 4(c)). The transparent conductive film 20 is thus obtained.

For the method of heating the conductive material layer, heating with an electric furnace or the like can be employed.

The transparent conductive layer can be formed by a variety of methods, but heating needs to be performed to crystallize the conductive material layer. In addition, when the conductive material layer is formed by coating, the composition containing a conductive material needs to be heated to dry after coating. The cured resin layer according to an embodiment of the present invention has an absolute value of a thermal deformation rate of 1.2% or lower by a temperature increase to 150°C as described above and thus is less susceptible to the effect of heating when the transparent conductive layer is formed.

The formation of the conductive material layer on the cured resin layer and the heating treatment of the conductive material layer are continuously performed while the casting film in an elongated shape on which the cured resin layer is formed is conveyed in a constant direction, and this can efficiently manufacture an elongated laminate in which the transparent conductive layer is formed on the cured resin layer.

Step 5

In Step 5, a portion of the transparent conductive layer formed in Step 4 is removed to form a transparent conductive layer (indicated by a reference sign 31 in Fig. 4(d)) patterned into a desired shape. The transparent conductive

film 21 having a patterned transparent conductive layer is obtained by going through Step 5.

Examples of the method of patterning the transparent conductive layer that can be employed include a method in which a portion corresponding to a desired shape is masked, and then an etching solution is brought into contact with the transparent conductive layer to partially remove the transparent conductive layer, or the transparent conductive layer is irradiated with a laser to remove an unnecessary part.

The transparent conductive layer having a desired pattern shape may be formed on the cured resin layer by selectively placing a transparent conductive material on the cured resin layer and heating this without going through a process, such as etching.

After obtaining the transparent conductive film by the process described above, the adhesive layer may be provided on the transparent conductive layer. As is clear from the above description, the transparent conductive film obtained by the manufacturing method described above is thin, excellent in heat resistance, excellent in transparency and optical isotropy, and the transparent conductive layer has good electrical properties.

[Examples]

The present invention will now be described in greater detail by way of examples, but the present invention is not limited by these examples.

Measurements of the physical properties and the evaluation of the cured resin layer and the laminate for a transparent conductive film of each example and each comparative example were performed according to the following procedures.

Measurement of thermal deformation rate of cured resin layer

A first poly(ethylene terephthalate) (PET) film on the cured resin layer side, the PET film corresponding to the casting film, was peeled off from the cured resin layer, four resulting cured resin layers were laminated, and a laminate with a thickness of 20 μm was formed. Then, the laminate was cut into a 5 mm x 30 mm test piece, and the test piece of the laminate of the cured resin layer was gripped using a thermomechanical analyzer (TMA4000SE, available from NETZSCH Japan K.K.) with a distance between chucks set at 20 mm. The laminate of the cured resin layer was then subjected to a temperature increase from 25°C to 150°C at 5°C/min and then cooled to 25°C at 5°C/min. Then, the rate of change of displacement (the value indicated by the percentage of displacement amount relative to the distance between chucks of 20 mm) in the longitudinal direction before and after heating was determined as the thermal deformation rate of the cured resin layer. The value was determined to be negative when the laminate of the cured resin layer shrank and positive when the laminate of the cured resin layer elongated.

Elongation at break of cured resin layer

The cured resin layer was cut into a 15 mm x 150 mm test piece, and the elongation at break was measured according to JIS K 7127: 1999. Specifically, the test piece was mounted on a tensile tester (Autograph, available from Shimadzu Corporation) with a distance between chucks set at 100 mm, and a tensile test was performed at a rate of 200 mm/min to measure the elongation at break [%]. When the test piece had no yield point, the tensile strain at break was considered to be the elongation at break, while when the test piece had a yield point, the strain at the yield point was considered to be the elongation at break.

Peelability of casting film in laminate for transparent conductive film

A second casting film of the laminate (50 mm in width) for a transparent conductive film was peeled off, then a first casting film (the first PET film in Examples 1, 2, and Comparative Examples 1 to 3, a biaxially stretched polyester film in Comparative Example 4) was peeled off at a peel angle of 180° and a peel rate of 0.3 m/min in accordance with JIS Z 0237: 2000 using a Tensilon universal testing machine RTG-1225 (A&D Company, Limited), and the change in appearance of the laminate for a transparent conductive film after testing was evaluated. The peel test described above was performed by adhering the surface of the cured resin layer, the surface exposed by peeling off the second casting film, to a glass plate with a double-sided pressure sensitive adhesive film and then peeling off the first casting film. The cured resin layer with no change in the shape was evaluated as pass ("A") and the cured resin layer with a change in the shape was evaluated as failure ("B").

Example 1

A curable resin composition 1 for forming a cured resin layer was prepared by the following procedure.

As a polymer component, 100 parts by mass of polyimide resin (PI) pellets (product name is KPI-MX300F, Tg = 354°C, weight average molecular weight is 280000, available from Kawamura Sangyo Co. Ltd.) was dissolved in methyl ethyl ketone (MEK) to prepare a 15 mass% solution of PI. Next, as a curable monomer, 122 parts by mass of tricyclodecane dimethanol diacrylate (A-DCP, available from Shin-Nakamura Chemical Co., Ltd.) and, as a polymerization initiator, 5 parts by mass of bis(2,4,6-trimethylbenzoyl)-phenylphosphine oxide (Irgacure 819, available from BASF) was added and mixed into the 15 mass% solution of PI above to prepare the curable resin composition 1. The curable monomer and polymerization initiator used in this Example and other experimental examples did not contain a solvent and were all raw materials with a solid content of 100%.

A first PET film (Cosmoshine PET100A-4160, available from Toyobo Co., Ltd., thickness 100 μm) having a primer layer on one surface was then used as the first casting film, and the surface of this PET film, the surface opposite from the primer layer, was coated with the curable resin composition. The resulting coating was heated and dried at 90°C for 3 minutes.

Furthermore, a second PET film (Cosmoshine PET50A-4160, available from Toyobo Co., Ltd., thickness 50 μm) having a primer layer on one surface was laminated as the second casting film on this dried coating to allow the surface of the second PET film, the surface opposite from the primer layer, to face the dried coating. Then, the dried coating was irradiated with ultraviolet light through the second PET film to carry out a curing reaction using a belt conveyor type ultraviolet light irradiation device (product name: ECS-401GX, available from Eye Graphics Co., Ltd.) and a high-pressure mercury lamp (product name: H04-L41, available from Eye Graphics Co., Ltd.) under conditions of a height of UV lamp of 100 mm, an output of an UV lamp of 3 kw, an intensity of 400 $mW/cm^2$ at a wavelength of 365 nm, and an amount of light of 800 $mJ/cm^2$ (measured with a UV actinometer UV-351, available from ORC Manufacturing Co., Ltd.), and a cured resin layer with a thickness of 5 μm was formed, and a laminate for a transparent conductive film was obtained.

Example 2

A laminate for a transparent conductive film was obtained in the same manner as in Example 1 except that the curable monomer was changed to a combined use of the tricyclodecane dimethanol diacrylate and a cyclic polymerization monomer (FX-AO-MA, available from Nippon Shokubai Co., Ltd.) (mixing ratio 1:1).

Example 3

A laminate for a transparent conductive film was obtained in the same manner as in Example 1 except that the total amount of the curable monomer was changed to the same cyclic polymerization monomer as that used in Example 2.

Comparative Example 1

A laminate for a transparent conductive film was produced in the same manner as in Example 1 except that polysulfone resin (PSF) pellets (ULTRASON S6010, available from BASF, Tg = 187°C) were used as the polymer component in place of the polyimide resin (PI) pellets.

Comparative Example 2

A methyl ethyl ketone solution of a polyimide resin was prepared by the same procedure as in Example 1 except that the curable monomer and the polymerization initiator were not added, and the solution was used as a resin composition 2. A simple resin layer, not a cured resin layer, was then formed by the same procedure as in Example 1 except that the resin composition 2 was used and the ultraviolet irradiation was not performed, and a laminate for a transparent conductive film was obtained.

The measurement results for each example and each comparative example are shown in Table 1.

[Table 1]

Table 1

| Item | | | | Unit | Example 1 | Example 2 | Example 3 | Comparative Example 1 | Comparative Example 2 |
|---|---|---|---|---|---|---|---|---|---|
| Cured resin layer | Blended amount | Binder resin | Soluble PI | part by mass | 100 | 100 | 100 | - | 100 |
| | | | PSF | part by mass | - | - | - | 100 | - |
| | | Curable monomer | DCP | part by mass | 122 | 61 | - | 122 | - |
| | | | AE | part by mass | - | 61 | 122 | - | - |
| | | Photopolymerization initiator | Irgacure 819 | part by mass | 5 | 5 | 5 | 5 | - |
| | Thickness | | | μm | 5 | 5 | 5 | 5 | 5 |
| Casting film | | | Product name | - | PET100A-4160 | PET100A-4160 | PET100A-4160 | PET100A-4160 | PET100A-4160 |
| Physical properties of cured resin layer | | | Thermal deformation rate | % | +0.6 | +0.4 | +1.0 | +2.0 | - |
| | | | Elongation at break | % | 2.7 | 3.4 | 3.3 | 2.0 | - |
| Evaluation | | | Peelability | - | A | A | A | A | Not evaluable |

*Meanings of abbreviations in Table 1
PI: Polyimide resin
PSF: Polysulfone resin
DCP: Tricyclodecane dimethanol diacrylate
AE: Cyclic polymerization monomer

As is clear from Table 1, in Examples 1 to 3, the cured resin layer contained the highly heat-resistant polymer component and was formed using the curable monomer, and the casting film having no release layer was used, and these enabled the casting film (first PET film) to be peeled off from the cured resin layer with a thickness of 10 μm or less without any problem.

In Comparative Example 1, the casting film (first PET film) was able to be peeled off from the cured resin layer with a thickness of 10 μm or less without any problem, but the thermal deformation rate of the cured resin layer was great, and this is not suitable for the transparent conductive layer formation process.

In Comparative Example 2, the curable monomer was not contained, thus the second casting film could not be peeled off, and the peelability could not be evaluated.

[Reference Signs List]

1, 1A, 1B: Casting film
2: Cured resin layer
2a: Curable resin layer (cured resin layer before curing)
3: Transparent conductive layer
3a: Conductive material layer
10A, 10B: Laminate for transparent conductive film
20: Transparent conductive film
21: Transparent conductive film with patterned transparent conductive layer
31: Patterned transparent conductive layer

**Claims**

1. A laminate for a transparent conductive film, the laminate to be used to form a transparent conductive film and comprising a casting film and a cured resin layer in this order, wherein

    the cured resin layer is a layer comprising a cured product of a curable resin composition containing a polymer component (A) and a curable monomer (B);
    an absolute value of a thermal deformation rate of the cured resin layer by a temperature increase to 150°C is 1.2% or lower;
    a thickness of the cured resin layer is 20 μm or less;
    the casting film has a first surface that may be provided with a release layer and a second surface not provided with a release layer; and
    the cured resin layer is formed on the second surface of the casting film.

2. The laminate for a transparent conductive film according to claim 1, wherein a glass transition temperature of the polymer component (A) is 250°C or higher.

3. The laminate for a transparent conductive film according to claim 1 or 2, wherein a weight average molecular weight of the polymer component (A) is 100000 or greater.

4. The laminate for a transparent conductive film according to any one of claims 1 to 3, wherein the polymer component (A) is a polyimide resin.

5. The laminate for a transparent conductive film according to claim 4, wherein the polyimide resin is soluble in methyl ethyl ketone.

6. The laminate for a transparent conductive film according to claim 4 or 5, wherein the polyimide resin has a fluoro group in the molecule.

7. The laminate for a transparent conductive film according to any one of claims 1 to 6, wherein an elongation at break of the cured resin layer is 2.5% or higher.

8. A transparent conductive film comprising the laminate for a transparent conductive film defined in any one of claims

1 to 7 and a transparent conductive layer provided on the cured resin layer of the laminate for a transparent conductive film.

**9.** A method of manufacturing a transparent conductive film, the method comprising:

forming a conductive material layer on the cured resin layer of the laminate for a transparent conductive film defined in any one of claims 1 to 7; and
heating the conductive material layer to 140°C or higher to form a transparent conductive layer.

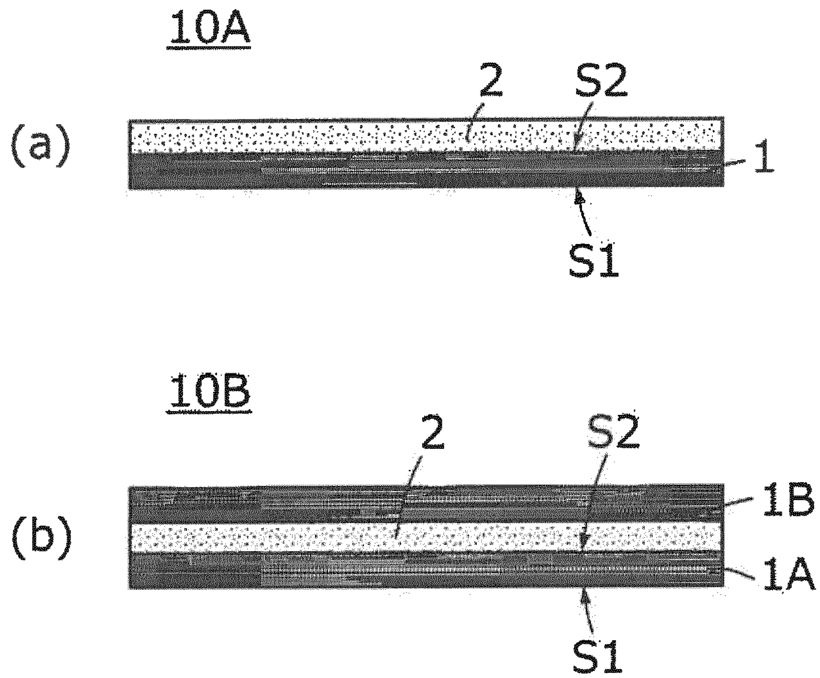


Fig. 1

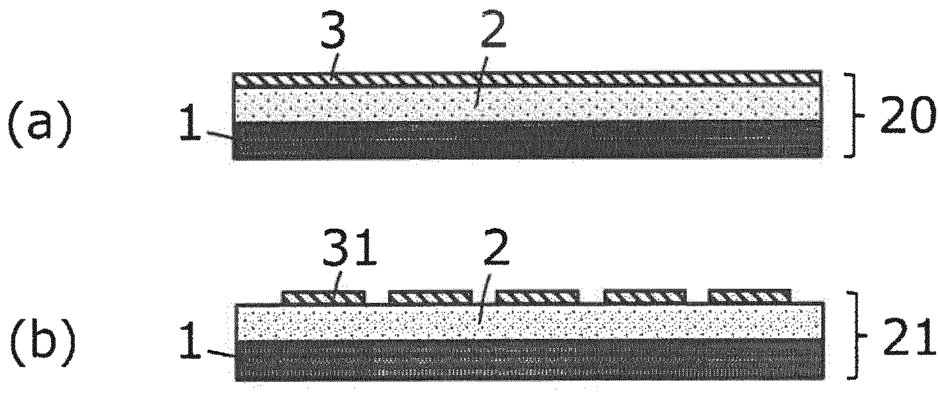


Fig. 2

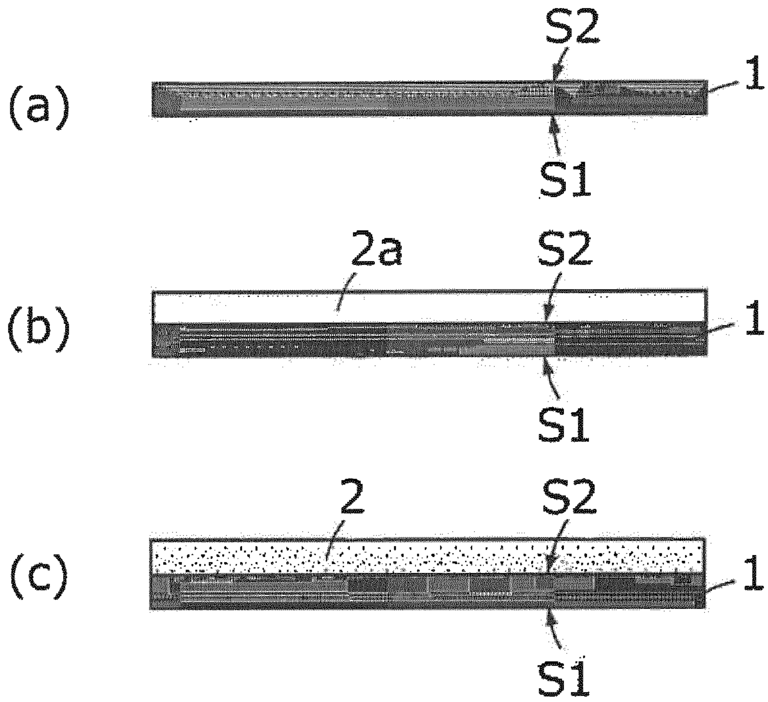


Fig. 3

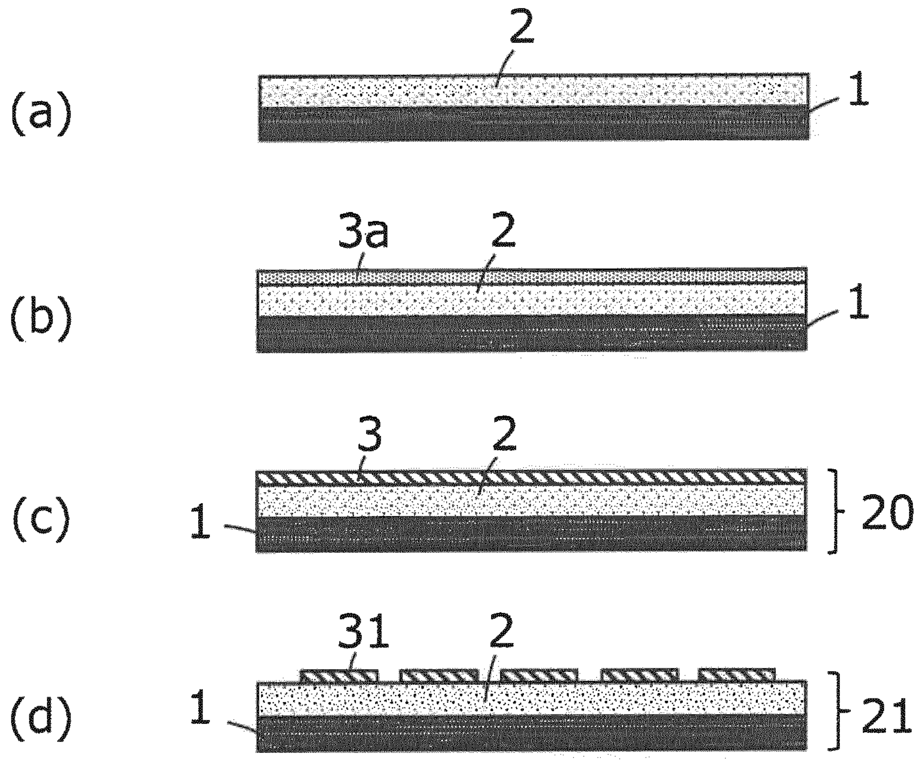


Fig. 4

**INTERNATIONAL SEARCH REPORT**

International application No. PCT/JP2021/012764

A. CLASSIFICATION OF SUBJECT MATTER

B32B 9/00(2006.01)i; B32B 27/00(2006.01)i; B32B 27/34(2006.01)i; H01B 5/14(2006.01)i; H01B 13/00(2006.01)i

FI: B32B27/00 Z; B32B27/34; B32B9/00 A; H01B5/14 A; H01B13/00 503B

According to International Patent Classification (IPC) or to both national classification and IPC

B. FIELDS SEARCHED

Minimum documentation searched (classification system followed by classification symbols)

B32B9/00; B32B27/00; B32B27/34; H01B5/14; H01B13/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2018-24225 A (FUJIFILM CORPORATION) 15 February 2018 (2018-02-15) entire text, all drawings | 1-9 |
| A | JP 2018-24226 A (FUJIFILM CORPORATION) 15 February 2018 (2018-02-15) entire text, all drawings | 1-9 |
| A | JP 2007-293001 A (MITSUI CHEMICALS, INC.) 08 November 2007 (2007-11-08) entire text, all drawings | 1-9 |
| A | JP 2018-122583 A (TOKYO OHKA KOGYO CO., LTD.) 09 August 2018 (2018-08-09) entire text, all drawings | 1-9 |

☐ Further documents are listed in the continuation of Box C.    ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 07 June 2021 (07.06.2021) | 15 June 2021 (15.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/012764

| Patent Documents referred in the Report | Publication Date | Patent Family | Publication Date |
|---|---|---|---|
| JP 2018-24225 A | 15 Feb. 2018 | US 2019/0004632 A1<br>entire text, all drawings<br>TW 201800232 A<br>KR 10-2018-0111911 A<br>CN 108712964 A | |
| JP 2018-24226 A | 15 Feb. 2018 | US 2019/0004632 A1<br>entire text, all drawings<br>TW 201800232 A<br>KR 10-2018-0111911 A<br>CN 108712964 A | |
| JP 2007-293001 A | 08 Nov. 2007 | (Family: none) | |
| JP 2018-122583 A | 09 Aug. 2018 | CN 108387954 A<br>entire text, all drawings<br>KR 10-2018-0090741 A<br>TW 201841767 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017179367 A
- JP 2004035638 A